# EUROPEAN PATENT SPECIFICATION

(11) **EP 4 507 172 B1**
(45) Date of publication and mention of the grant of the patent: **16.09.2026**
(21) Application number: 22934560.8
(22) Date of filing: 22.06.2022
(51) Int. Cl.: F04B 53/16, F04B 53/00, F04B 17/04, H02K 5/20, H02P 4/00, H02K 5/04, H02K 5/24, H02K 11/00, H02P 29/024, B62D 5/06

(54) **DUAL-SOURCE MOTOR PUMP**
MOTORPUMPE MIT ZWEI QUELLEN
POMPE À MOTEUR À DOUBLE SOURCE

(30) Priority: 02.04.2022 CN 202210344180
(43) Date of publication of application: 12.02.2025
(73) Proprietor: Quanxing Machining Group Co., Ltd., Zhuji, Zhejiang 311899 (CN)
(72) Inventor: LIU, Dong, Zhejiang 311899 (CN); QIU, Hangfeng, Zhejiang 311899 (CN); JIN, Hekun, Zhejiang 311899 (CN); CHEN, Tiantian, Zhejiang 311899 (CN); FU, Hong, Zhejiang 311899 (CN); KIM, Wonho, Zhejiang 311899 (CN); ZHANG, Wenxiang, Zhejiang 311899 (CN)
(74) Representative: Michalski Hüttermann & Partner mbB
(86) International application number: PCT/CN2022/100391
(87) International publication number: WO 2023/184737

(56) References cited:
- CN-A- 106 274 757
- CN-A- 107 869 461
- CN-A- 109 113 954
- CN-A- 109 113 954
- CN-A- 110 509 987
- CN-U- 203 548 377
- CN-U- 209 683 799
- CN-U- 211 731 541
- CN-U- 211 731 541
- DE-U1- 20 205 936
- JP-A- 2006 256 519
- KR-A- 20120 086 471
- US-A1- 2021 324 849

## Description

### Technical Field

The present disclosure relates to the technical field of automotive equipment, particularly to a dual source motor pump.

### Background

With continuous development of the new energy electric vehicle, higher requirements are put forward for safety and reliability of the entire vehicle.

At present, the dual source motor pump in the steering system of the new energy vehicle on the market operates in a dual source mode, that is, the dual source motor has two sets of windings of high voltage and low voltage. In a normal mode, the high-voltage winding of the dual source motor operates to provide steering power for the entire vehicle. The high-voltage winding is connected to the power battery of the entire vehicle, while the low-voltage winding is connected to the low-voltage battery. When the high-voltage system of the entire vehicle malfunctions and cannot assist, the low-voltage power supply is switched on to provide short-term emergency power steering.

Where the dual source motor pump is also used to supply oil to some systems in the entire vehicle, such as the front axle hydraulic system, etc., and the dual source motor pump summarized in the prior art has the following problems during use:
1) The dual source motor pump has loud noise when loaded at work, and the noise is sharp and harsh, resulting in the subjective evaluation of the vehicle being difficult to accept.
2) During the installation and use of the entire vehicle, some wiring harnesses, or control chips or the like of the vehicle may be burned out when the power supply is reversed.
3) The operation of the entire vehicle may cause some fault alarms, affecting the use of the vehicle.

D1 (US2021324849A1) discloses a motor oil pump assembly, which includes: an inner sound insulation enclosure encloses an oil pump component, and the inner sound insulation enclosure and the oil pump component define an inner sound insulation cavity filled with low-pressure oil, the inner sound insulation cavity is in communication with a low-pressure cavity of the oil pump component, and the inner sound insulation enclosure is provided with a sound insulation enclosure cavity.

D6 (CN211731541U) discloses a dual-source electro-hydraulic power steering pump system, which includes a dual-source electro-hydraulic power steering pump, a high-voltage controller, a 24V low-voltage controller, a high-voltage battery pack, a 24V battery, a CAN communication module and a warning device.

### Summary

A summary of the subject described in detail in the present disclosure is provided below. This summary is not intended to limit the protection of the claims.

The scope of protection is defined by the respective subject-matter of the appended claims.

### Brief Description of the Drawings

The accompanying drawings incorporated into the specification and constituting a part of the specification illustrate the embodiments of the present disclosure, and are used together with the description to explain the principles of the present disclosure. In these accompanying drawings, similar reference numerals represent similar elements. The accompanying drawings in the following description illustrate some rather than all of the embodiments of the present disclosure.
FIG. 1 is a schematic diagram of a dual source motor pump in an embodiment.
FIG. 2 is a sectional view of a housing of the dual source motor pump in an embodiment.
FIG. 3 is a schematic diagram of a motor body of the dual source motor pump in an embodiment.
FIG. 4 is a schematic diagram of a cut-off circuit in the dual source motor pump in an embodiment.
FIG. 5 is a schematic diagram of a circuit of a cut-off unit in the dual source motor pump in an embodiment.

Reference numerals:
1, motor body; 2, steering oil pump; 3, housing; 4, accommodating chamber; 5, low-voltage controller; 6, power supply terminal; 7, high-voltage controller; 11, low-voltage steering winding; 12, high-voltage steering winding; 31, inner wall surface; 32, outer wall surface; 33, sound insulation gap layer; 34, housing oil inlet; 35, housing oil outlet; 36, oil return port; 37, housing mounting hole; 51, cut-off module; 52, cut-off control module; 53, cut-off circuit; 311, annular board; 312, first board; 313, second board; 331, first gap; 332, second gap; 531, cut-off unit; 532, zener diode; 533, first resistor; 534, second resistor;
A, control circuit; N1, source; N2, gate; N3, drain; P, control signal.

### Detailed Description

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some rather than all of the embodiments of the present disclosure. All other embodiments obtained by those skilled in the art based on the embodiments of the present disclosure without creative efforts should fall within the protection scope of the present disclosure. It should be noted that the embodiments in the present disclosure and features in the embodiments may be combined with each other in a non-conflicting manner.

The present disclosure aims to expand the heat dissipation area of oil circulation in the steering oil pump and reduce oil temperature of the system of the dual source motor pump during the operation process of the dual source motor pump. Meanwhile, the oil in the accommodating chamber can absorb part of the vibration generated during the operation of the motor body, thereby avoiding to produce sharp and harsh noise, improving and enhancing the driving environment of the vehicle, and extending the service cycle of the dual source motor pump.

The dual source motor pump provided in accordance with the present disclosure is described in detail below with reference to the accompanying drawings.

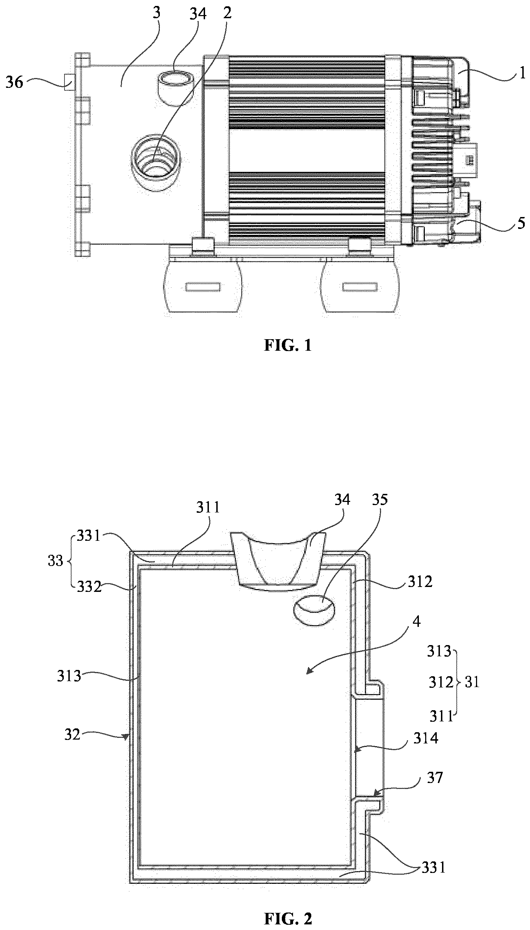

Referring to FIG. 1, the dual source motor pump includes: a motor body 1, a steering oil pump 2, and a housing 3 provided outside the steering oil pump 2.

The steering oil pump 2 is fixed on the motor body 1. The steering oil pump 2 may be fixed on the motor body 1 through a connecting piece, where the connecting piece may include a fixing bolt or the like. An input shaft end of the steering oil pump 2 is connected to an output shaft end of the motor body 1 to drive the steering oil pump 2 to rotate through the motor body 1. A metal sealing ring or an oil seal or the like may be disposed between the steering oil pump 2 and the motor body 1 to ensure the sealing performance between the steering oil pump 2 and the motor body 1.

The housing 3 may be fixed on the motor body 1 through the connecting piece which may include the fixing bolt or the like. Referring to FIGS. 1 and 2, the interior of the housing 3 is constructed as an installation space, in which the steering oil pump 2 is located, thereby forming an accommodating chamber 4 between the housing 3 and the steering oil pump 2. The accommodating chamber 4 is in internal communication with the steering oil pump 2, and the oil in the steering oil pump 2 is capable of entering the accommodating chamber 4, allowing for oil circulation within the accommodating chamber 4, and increasing the path of oil circulation in the steering oil pump 2.

In this embodiment, the path of oil circulation is increased by utilizing the accommodating chamber, and the heat dissipation area of oil circulation is expanded through the side wall of the housing, thereby reducing oil temperature of the system during the operation of the dual source motor pump. Meanwhile, oil in the accommodating chamber can absorb part of the vibration generated during the operation of the motor body, providing a good driving environment for the vehicle and extending the service cycle of the dual source motor pump.

In some embodiments, referring to FIG. 2, the housing 3 includes an inner wall surface 31 and an outer wall surface 32. Where the outer wall surface 32 may be an outer wall of the housing 3. The outer wall surface 32 and the inner wall surface 31 are separated apart a predetermined distance, so that a sound insulation gap layer 33 is formed between the inner wall surface 31 and the outer wall surface 32. The number of layers of the sound insulation gap layer 33 is at least one, for example, the sound insulation gap layers 33 may be two, three, or more layers.

The dual source motor pump in the prior art produces sharp and harsh noise during operation, such as in a working state or a loading state, especially in the loading state. And the noise makes the subjective evaluation of driver to the vehicle difficult to accept. In this embodiment, at least one sound insulation gap layer 33 can be used to improve the sound insulation and noise reduction function of the housing 3, effectively preventing the other part of vibration not absorbed by the oil in the accommodating chamber 4 from being transmitted to the outside when the motor body 1 is loaded. Meanwhile, the sound insulation gap layer 33 in conjunction with the accommodating chamber 4 can optimize the sharp and harsh noise, reduce the high frequency noise, and eliminate the sharp and harsh noise, thereby solving the problem of sharp and harsh noise, providing a good driving environment for drivers, and improving their driving comfort.

In one example, the inner wall surface 31 may include an annular board 311, a first board 312, and a second board 313. The first board 312 and the second board 313 are configured to close the two ends of the annular board 311 along the extension direction of the output shaft end of the motor body 1. The first board 312 is provided with a mounting end face 314 for connecting with the motor body 1. The second board 313 is opposite to the first board 312, and the second board 313 is farther away from the motor body 1 than the first board 312.

An outside wall (i.e. the side facing the outer wall surface 32) of the annular board 311 and an outside wall (the side facing the outer wall surface 32) of the first board 312, together with the outer wall surface 32 form a sound insulation gap layer 33. Where the sound insulation gap layer 33 may include a first gap 331 and a second gap 332. Referring to FIG. 2, a distance between an outside wall of the second board 313 and the outer wall surface 32 is defined as the second gap 332, a distance between the outside wall of the first board 312 and the outer wall surface 32, as well as a distance between the outside wall of the annular board 311 and the outer wall surface 32 are defined as the first gap 331. Where, along a direction parallel to an axis of the output shaft of the motor body 1, the width of the first gap 331 is different from the width of the second gap 332. Where, the width of the first gap 331 and the width of the second gap 332 range from 1 mm to 4 mm. For example, in a specific embodiment, the width of the first gap 331 and the width of the second gap 332 are the same, and the widths are both 2mm.

When the motor body 1 is in a normal state or in a loading state, the vibration noise generated from the motor body 1 spreads in all directions. When the motor body 1 is installed, there is generally an empty space in the radial direction of the housing 3, and the noise not absorbed by the oil in the accommodating chamber 4 will be transmitted to the outside of the housing 3 along the radial direction. Therefore, the width of the gap (i.e., part of the first gap) in the radial direction of the housing 3 is increased, so as to reduce the transmission of the noise along the radial direction. And a side of the accommodating chamber 4 facing the motor body 1 abuts against or is fixedly connected to the motor body 1. In order to reduce the influence of noise on the motor body 1, it is also necessary to increase the width of the gap (i.e. part of the first gap) between the housing 3 and the motor body 1. The noise in the direction of the motor body 1 toward the housing 3 is subjected to being absorbed by the oil in the accommodating chamber 4, and less noise can pass out in this direction, such that the width of the gap (i.e. the second gap) on the side of the housing 3 away from the motor body 1 may be reduced. Therefore, in one example, the width of the second gap 332 is less than the width of the first gap 331.

Of course, the width of the second gap 332 may also be greater than the width of the first gap 331, or the width of the second gap 332 may be equal to the width of the first gap 331.

Referring to FIG. 2, in some embodiments, air may be filled in the sound insulation gap layer 33 to absorb part of the noise generated during the operation of the motor body 1, effectively reducing the transmission of the noise and improving the sound insulation and noise reduction effect of the housing 3.

Alternatively, the sound insulation gap layer 33 is vacuumized so that the inside of the sound insulation gap layer 33 is in a vacuum state. The sound insulation gap layer 33 in vacuum state, in conjunction with the circulation channel in the accommodating chamber 4, optimizes the sharp and harsh noise generated by the dual source motor pump in the working state or in the loading state, so as to solve the problem of sharp and harsh noise from the ear sense, and improve the driving comfort of the drivers.

Alternatively, the sound insulation gap layer 33 is filled with sound insulation materials, such as soundproof cotton, rock wool, etc. The sound reduction and noise isolation effect of the housing 3 is improved by using the sound insulation materials.

Alternatively, the sound insulation gap layer 33 is filled with nitrogen or inert gas. The inert gas may include, but is not limited to, helium, neon, argon, radon, etc. The inert gas may also be a mixture of multiple gases. Alternatively, other gases that are chemically inert at ambient temperature and moderate temperature, such as nitrogen, may be used as sound insulation filling material. Where the temperature range of the moderate temperature may be understood as between 60°C and 120 °C.

Referring to FIG. 2, in some embodiments, the housing 3 includes a housing oil inlet 34 and a housing oil outlet 35. Where the housing oil inlet 34 is provided on the top surface of the housing 3. The housing oil outlet 35 is provided on the side wall of the housing 3. And there is a height difference between the housing oil outlet 35 and the housing oil inlet 34 to facilitate the subsequent oil circulation in the oil circulation channel formed within the housing 3. One end of the housing oil outlet 35 passes through the sound insulation gap layer 33 and extends into the accommodating chamber 4.

The steering oil pump 2 includes an oil pump inlet (not shown in the figure) and an oil pump outlet (not shown in the figure). Where the housing oil inlet 34 is in communication with the oil pump inlet, and the housing oil outlet 35 is in communication with the oil pump outlet, forming the circulation channel for oil circulation. When the oil in steering oil pump 2 circulates in the circulation channel, the heat dissipation area of the oil is effectively increased, thereby reducing the oil temperature in the oil circulation system. Meanwhile, the oil in the circulation channel can also absorb part of the vibration generated by the dual source motor pump, thereby optimizing the sharp and harsh noise caused by the vibration, reducing high frequency noise, and improving the comfort of the drivers.

The housing 3 further includes an oil return port 36, the oil return port 36 is in communication with an external oil pot (not shown in the figure). Where the oil return port 36 is located at the top of the outer sidewall of the outer wall surface 32.

It should be noted that seals (such as metal sealing rings or oil seals) are provided between the housing oil inlet 34, the housing oil outlet 35, and the steering oil pump 2 for sealing therebetween.

Referring to FIG. 2, in some embodiments, the housing 3 is provided with a housing mounting hole 37. The housing mounting hole 37 is provided with a flange end face. When the housing 3 is mounted, the housing mounting hole 37 passes through the output shaft of the motor body 1, and the flange end face of the housing mounting hole 37 is in contact with a flange surface of the steering oil pump 2. Then, the steering oil pump 2 and the housing 3 are mounted on a flange surface of the motor body 1 through fasteners such as bolts. The housing mounting hole 37 may be used to quickly and conveniently complete the installation of the dual source motor pump, and at the same time, facilitates the maintenance and repair of the dual source motor pump.

Referring to FIG. 2, in some embodiments, the material of the housing 3 may include, but is not limited to, non-metallic material, and the non-metallic material includes nylon, resin, etc. The housing 3 includes the outer wall surface 32 and the inner wall surface 31, where the material of the outer wall surface 32 may be the same as the material of the inner wall surface 31, or the material of the outer wall surface 32 may be different from the material of the inner wall surface 31.

In this embodiment, the material of the outer wall surface 32 is the same as the material of the inner wall surface 31 to reduce the manufacturing difficulty and production cost of the housing 3.

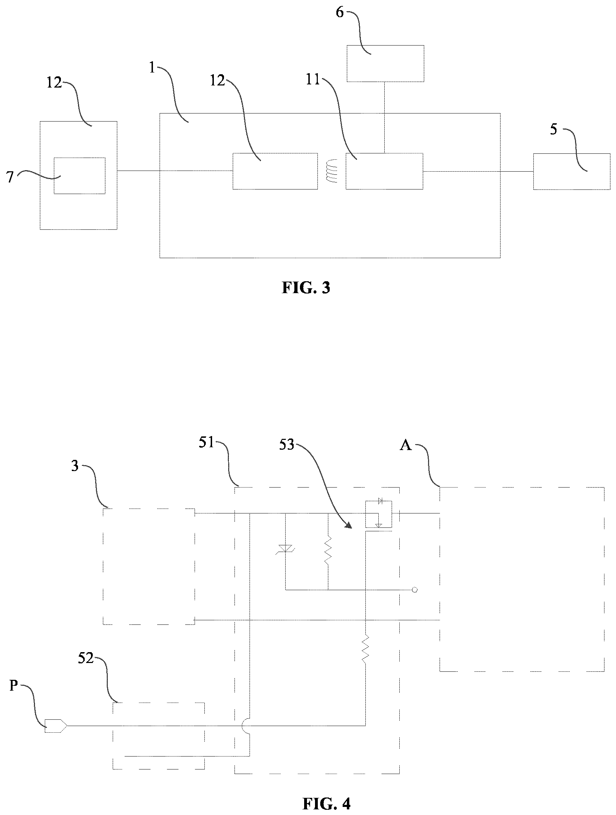

Referring to FIG. 3, in some embodiments, the motor body 1 includes a low-voltage steering winding 11, and a high-voltage steering winding 12 is also provided inside the motor body 1 to achieve the dual-source control. Where the operation of the high-voltage steering winding 12 is controlled by a high-voltage controller 7. It should be noted that the control logic operation of the high-voltage controller 7 may be the prior art. The high-voltage steering winding 12 and the low-voltage steering winding 11 are spaced apart, where the high-voltage steering winding 12 is the main winding, and is configured to provide steering assistance when the vehicle runs normally. When the vehicle runs normally, the low-voltage steering winding 11 operates in a low-power output state, or the low-voltage steering winding 11 is in a standby state. When the high-voltage steering winding 12 operates abnormally, the low-voltage steering winding 11 is introduced and provides short-term emergency power steering to enable the faulty vehicle to run to a safe position, effectively ensuring the safety of the drivers.

Referring to FIG. 3, the dual source motor pump in this embodiment further includes a low-voltage controller 5. The low-voltage controller 5 is connected to a power supply terminal 6 and the low-voltage steering winding 11, respectively. The low-voltage controller 5 includes a cut-off module 51, the cut-off module 51 is configured to cut off the electrical energy generated by coupling of the low-voltage steering winding 11 during the operation of the high-voltage steering winding 12, and plays a certain function of preventing reverse connection in the circuit, improving the service cycle of the dual source motor pump.

It should be noted that the power supply terminal 6 includes a power supply module, where a high-voltage power supply module, a low-voltage power supply module, and a main power supply module are provided in the power supply module. The high-voltage power supply module is configured to supply power to the high-voltage steering winding 12, the low-voltage power supply module is configured to supply power to the low-voltage steering winding 11, and the main power supply module may be configured to supply power to other devices in the dual source motor pump. The power supply module may include, but is not limited to, a storage battery, a lead-acid battery, a lithium battery, etc. A charging module may also be provided in the power supply module to charge the power supply module through an external power line, improving the service cycle and efficiency of the dual source motor pump.

Referring to FIG. 4, in some embodiments, the low-voltage controller 5 further includes a cut-off control module 52. The cut-off control module 52 communicates with the cut-off module 51. Where a cut-off circuit 53 is provided inside the cut-off module 51. The low-voltage controller 5 is configured to send a control signal P, and the cut-off control module 52 receives the control signal P and indicates the cut-off circuit 53 to be turned off or turned on.

Where the cut-off circuit 53 is electrically connected to a control circuit A of the motor body 1, and the control circuit A is configured to control the low-voltage steering winding 11 and/or the high-voltage steering winding 12. That is, the control circuit A of the motor body 1 may be connected downstream to the cut-off circuit 53 and used as a load of the cut-off circuit 53. The cut-off circuit 53 may be provided in a positive line or a negative line of the control circuit A of the motor body 1.

In the present disclosure, the cut-off circuit 53 in the cut-off module 51 can effectively prevent the charging energy generated by coupling of the low-voltage steering winding 11 when the high-voltage steering winding 12 operates. At the same time, the cut-off circuit 53 can play a protection role in preventing reverse connection in the circuit, so as to prevent the problem of burning of wiring harnesses or control chips caused by reverse connection of the power supply, and improve the utilization rate of energy consumption of the entire vehicle and the stability and safety of the vehicle during operation.

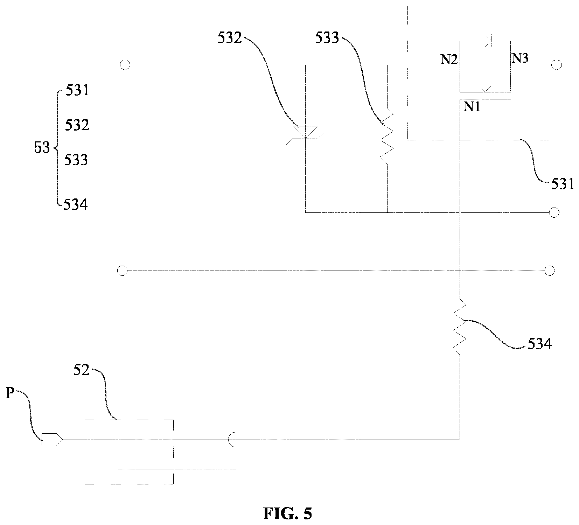

Referring to FIG. 5, the cut-off circuit 53 includes a cut-off unit 531, where the cut-off unit 531 includes an NMOS transistor or a relay.

Where the cut-off circuit 53 further includes a zener diode 532, a first resistor 533, and a second resistor 534. Hereinafter, taking the cut-off unit 531 being the NMOS transistor as an example, the NMOS transistor includes a source N1, a gate N2, and a drain N3.

Referring to FIG. 5, the source N1 of the NMOS transistor is electrically connected to an anode of the power supply terminal 6, an anode of the zener diode 532, and a first end of the first resistor 533, respectively.

The gate N2 of the NMOS transistor is electrically connected to a cathode of the zener diode 532, a second end of the first resistor 533, and a first end of the second resistor 534, respectively.

The drain N3 of the NMOS transistor is electrically connected to the low-voltage steering winding 11.

A second end of the second resistor 534 communicates with the cut-off control module 52. For example, the second end of the second resistor 534 is connected to the cut-off control module 52 through a communication line.

In this embodiment, the cut-off circuit 53 is a cut-off circuit based on the forward of the power supply of the NMOS transistor. And the cut-off circuit 53 can prevent the high voltage, generated during operation (including the working state and the loading state) of the back-end power device such as the high-voltage steering winding 12, from breaking down the power supply terminal 6 or charging the power supply terminal 6 in the reverse direction.

When the dual source motor pump is in a standby mode, the high-voltage steering winding 12 in the motor body 1 operates to drive the steering oil pump 2 to work to meet normal steering needs. At this time, the low-voltage steering winding 11 will not turn on the cut-off circuit 53 (this is the normal operating condition of the entire vehicle). That is, when the control signal P sent by the low-voltage controller 5 is at a low level, an output level of the output terminal of the cut-off control module 52 is opposite to the level of the source N1 of the NMOS transistor. At this time, the NMOS transistor is in a disconnection state, so the back-end power device will not affect the power supply terminal 6.

When abnormal situations occur during the operation of the entire vehicle, in order to ensure the safety and stability of the steering of the entire vehicle, it is necessary to confirm whether the emergency steering needs to be activated according to the motor speed. When the entire vehicle is abnormal and the motor speed drops to a preset value, for example, when the speed of the first rotor assembly in the high-voltage steering winding 12 drops from 1500RPM (Revolutions Per Minute) to 800RPM, the low-voltage controller 5 will send a control signal P, and the cut-off control module 52 receives the control signal P to indicate the NMOS transistor to be turned on. At this time, the control signal P sent by the low-voltage controller 5 is at a high level, and a level of the gate N2 of the NMOS transistor transmitted from the output terminal of the cut-off control module 52 is 10 volt to 12 volt higher than a level of the source N1 of the NMOS transistor. At this time, the NMOS transistor is in an on state, and the power supply terminal 6 can normally supply power to the control circuit A and other back-end power devices of the motor body 1. It should be noted that, in order to ensure the timeliness of emergency steering of the entire vehicle, the emergency response switching time of the dual source motor pump in the present disclosure is less than 100ms.

In one example, the cut-off unit 531 may be a relay. It should be noted that, the on or off of the relay being controlled according to the level of the control signal P sent by the low-voltage controller 5 may be the prior art.

It should be noted that, in the present disclosure, the terms "include", "including", or any other variation thereof are intended to cover a non-exclusive inclusion, such that an item or device including a series of elements not only includes those elements, but also includes other elements not expressly listed, or also includes elements inherent to such item or device. Without further limitations, the elements limited by the statement "includes ..." do not exclude the existence of other identical elements in the item or device including the elements.

### Industrial Applicability

The dual source motor pump of the present disclosure can expand the heat dissipation area of oil circulation in the steering oil pump by utilizing the housing and the accommodating chamber, reducing the oil temperature of the system of the dual source motor pump. Meanwhile, oil in the accommodating chamber can also absorb part of the vibration generated during the operation of the motor body, providing a good driving environment for the vehicle, and extending the service cycle of the dual source motor pump.

## Claims

1. A dual source motor pump, comprising: a motor body (1), a steering oil pump (2), and a housing(3) provided outside the steering oil pump (2), wherein the steering oil pump (2) and the housing (3) are fixed on the motor body (1);
an accommodating chamber (4) is provided between the housing (3) and the steering oil pump (2), the accommodating chamber (4) is ininternal communication with the steering oil pump (2), and oil in the steering oil pump (2) is capable of entering the accommodating chamber (4);
**characterized in that**: the housing (3) comprises an inner wall surface (31) and an outer wall surface (32), and at least one sound insulation gap layer (33) is provided between the inner wall surface (31) and the outer wall surface (32);
wherein the inner wall surface (31) comprises an annular board (311), a first board (312), and a second board (313); an outside wall of the annular board (311) and an outside wall of the first board (312), together with the outer wall surface (32) form the sound insulation gap layer (33), wherein the sound insulation gap layer (33) includes a first gap (331) and a second gap (332);
a distance between an outside wall of the second board (313) and the outer wall surface (32) is the second gap (332); a distance between the outside wall of the first board (312) and the outer wall surface (32), as well as a distance between the outside wall of the annular board (311) and the outer wall surface (32), is the first gap (331); and a width of the second gap (332) is less than a width of the first gap (331).

2. The dual source motor pump of claim 1, wherein the sound insulation gap layer (33) is filled with air; or
the sound insulation gap layer (33) is in a vacuum state; or
the sound insulation gap layer (33) is filled with sound insulation material; or
the sound insulation gap layer (33) is filled with nitrogen or inert gas.

3. The dual source motor pump of claim 1, wherein the housing (3) comprises a housing oil inlet (34) and a housing oil outlet (35), the steering oil pump (2) comprises an oil pump inlet and an oil pump outlet, the housing oil inlet (34) is in communication with the oil pump inlet, and the housing oil outlet (35) is in communication with the oil pump outlet; and
the housing (3) further comprises an oil return port (36), and the oil return port (36) is in communication with an external oil pot.

4. The dual source motor pump of claim 1, wherein the housing (3) is provided with a housing mounting hole (37), and the housing mounting hole (37) is connected to the motor body (1) through a connecting piece.

5. The dual source motor pump of claim 1, wherein material of the housing (3) comprises non-metallic material.

6. The dual source motor pump of claim 1, wherein the dual source motor pump further comprises a low-voltage controller (5), the motor body (1) comprises a low-voltage steering winding (11), the low-voltage controller (5) is connected to a power supply terminal (6) and the low-voltage steering winding (11), respectively, the low-voltage controller (5) comprises a cut-off module (51), and the cut-off module (51) is configured to cut off electrical energy generated by coupling of the low-voltage steering winding (11) during an operation of a high-voltage steering winding (12).

7. The dual source motor pump of claim 6, wherein the low-voltage controller (5) further comprises a cut-off control module (52), the cut-off control module (52) communicates with the cut-off module (51), and the cut-off module (51) comprises a cut-off circuit (53); wherein the low-voltage controller (5) is configured to send a control signal(P), and the cut-off control module (52)is configured to receive the control signal (P) and indicate the cut-off circuit (53) to be turned off or turned on.

8. The dual source motor pump of claim 7, wherein the cut-off circuit (53) comprises a cut-off unit (531), and the cut-off unit (531) comprises an NMOS transistor or a relay.

9. The dual source motor pump of claim 8, wherein the cut-off circuit (53) further comprises a zener diode (532), a first resistor (533), and a second resistor (534); and
the NMOS transistor comprises a source (N1), a gate (N2), and a drain (N3);
wherein, the source (N1) of the NMOS transistor is electrically connected to an anode of the power supply terminal (6), an anode of the zener diode (532), and a first end of the first resistor (533), respectively;
the gate (N2) of the NMOS transistor is electrically connected to a cathode of the zener diode (532), a second end of the first resistor (533), and a first end of the second resistor (534), respectively;
the drain (N3) of the NMOS transistor is electrically connected to the low-voltage steering winding (11); and
a second end of the second resistor (534) communicates with the cut-off control module (52).

## Patentansprüche

1. Motorpumpe mit zwei Quellen, umfassend: einen Motorkörper (1), eine Lenkungsölpumpe (2) und ein Gehäuse (3), das außerhalb der Lenkungsölpumpe (2) bereitgestellt ist, wobei die Lenkungsölpumpe (2) und das Gehäuse (3) an dem Motorkörper (1) befestigt sind;
eine Aufnahmekammer (4) zwischen dem Gehäuse (3) und der Lenkungsölpumpe (2) bereitgestellt ist, die Aufnahmekammer (4) in interner Verbindung mit der Lenkungsölpumpe (2) steht und Öl in der Lenkungsölpumpe (2) in der Lage ist, in die Aufnahmekammer (4) einzutreten;
**dadurch gekennzeichnet, dass**: das Gehäuse (3) eine innere Wandfläche (31) und eine äußere Wandfläche (32) umfasst und mindestens eine Schalldämmungsspaltschicht (33) zwischen der inneren Wandfläche (31) und der äußeren Wandfläche (32) bereitgestellt ist;
wobei die innere Wandfläche (31) eine ringförmige Platte (311), eine erste Platte (312) und eine zweite Platte (313) umfasst; eine äußere Wand der ringförmigen Platte (311) und eine äußere Wand der ersten Platte (312) zusammen mit der äußeren Wandfläche (32) die Schalldämmungsspaltschicht (33) bilden, wobei die Schalldämmungsspaltschicht (33) einen ersten Spalt (331) und einen zweiten Spalt (332) aufweist;
ein Abstand zwischen einer äußeren Wand der zweiten Platte (313) und der äußeren Wandfläche (32) der zweite Spalt (332) ist; ein Abstand zwischen der äußeren Wand der ersten Platte (312) und der äußeren Wandfläche (32) sowie ein Abstand zwischen der äußeren Wand der ringförmigen Platte (311) und der äußeren Wandfläche (32) der erste Spalt (331) sind; und eine Breite des zweiten Spalts (332) kleiner als eine Breite des ersten Spalts (331) ist.

2. Motorpumpe mit zwei Quellen nach Anspruch 1, wobei die Schalldämmungsspaltschicht (33) mit Luft gefüllt ist; oder
sich die Schalldämmungsspaltschicht (33) in einem Vakuumzustand befindet; oder
die Schalldämmungsspaltschicht (33) mit Schalldämmungsmaterial gefüllt ist; oder
die Schalldämmungsspaltschicht (33) mit Stickstoff oder Inertgas gefüllt ist.

3. Motorpumpe mit zwei Quellen nach Anspruch 1, wobei das Gehäuse (3) einen Gehäuseöleinlass (34) und einen Gehäuseölauslass (35) umfasst, die Lenkungsölpumpe (2) einen Ölpumpeneinlass und einen Ölpumpenauslass umfasst, der Gehäuseöleinlass (34) in Verbindung mit dem Ölpumpeneinlass steht und der Gehäuseölauslass (35) in Verbindung mit dem Ölpumpenauslass steht; und
das Gehäuse (3) ferner eine Ölrücklauföffnung (36) umfasst und die Ölrücklauföffnung (36) in Verbindung mit einem externen Ölbehälter steht.

4. Motorpumpe mit zwei Quellen nach Anspruch 1, wobei das Gehäuse (3) mit einer Gehäusebefestigungsbohrung (37) versehen ist und die Gehäusebefestigungsbohrung (37) durch ein Verbindungsstück mit dem Motorkörper (1) verbunden ist.

5. Motorpumpe mit zwei Quellen nach Anspruch 1, wobei Material des Gehäuses (3) nicht metallisches Material umfasst.

6. Motorpumpe mit zwei Quellen nach Anspruch 1, wobei die Motorpumpe mit zwei Quellen ferner eine Niederspannungssteuerung (5) umfasst, der Motorkörper (1) eine Niederspannungslenkungswicklung (11) umfasst, die Niederspannungssteuerung (5) mit einem Leistungsversorgungsanschluss (6) bzw. der Niederspannungslenkungswicklung (11) verbunden ist, die Niederspannungssteuerung (5) ein Abschaltmodul (51) umfasst und das Abschaltmodul (51) dazu konfiguriert ist, elektrische Energie, die durch Koppeln der Niederspannungslenkungswicklung (11) während eines Betriebs einer Hochspannungslenkungswicklung (12) erzeugt wird, abzuschalten.

7. Motorpumpe mit zwei Quellen nach Anspruch 6, wobei die Niederspannungssteuerung (5) ferner ein Abschaltsteuermodul (52) umfasst, das Abschaltsteuermodul (52) mit dem Abschaltmodul (51) in Verbindung steht und das Abschaltmodul (51) einen Abschaltkreis (53) umfasst; wobei die Niederspannungssteuerung (5) dazu konfiguriert ist, ein Steuersignal (P) zu senden, und das Abschaltsteuermodul (52) dazu konfiguriert ist, das Steuersignal (P) zu empfangen und zu signalisieren, dass der Abschaltkreis (53) aus- oder einzuschalten ist.

8. Motorpumpe mit zwei Quellen nach Anspruch 7, wobei der Abschaltkreis (53) eine Abschalteinheit (531) umfasst und die Abschalteinheit (531) einen NMOS-Transistor oder ein Relais umfasst.

9. Motorpumpe mit zwei Quellen nach Anspruch 8, wobei der Abschaltkreis (53) ferner eine Zener-Diode (532), einen ersten Widerstand (533) und einen zweiten Widerstand (534) umfasst; und
der NMOS-Transistor eine Source (N1), ein Gate (N2) und einen Drain (N3) umfasst;
wobei die Source (N1) des NMOS-Transistors elektrisch mit einer Anode des Leistungsversorgungsanschlusses (6), einer Anode der Zener-Diode (532) bzw. einem ersten Ende des ersten Widerstands (533) verbunden ist;
das Gate (N2) des NMOS-Transistors elektrisch mit einer Kathode der Zener-Diode (532), einem zweiten Ende des ersten Widerstands (533) bzw. einem ersten Ende des zweiten Widerstands (534) verbunden ist;
der Drain (N3) des NMOS-Transistors elektrisch mit der Niederspannungslenkungswicklung (11) verbunden ist; und
ein zweites Ende des zweiten Widerstands (534) mit dem Abschaltsteuermodul (52) in Verbindung steht.

## Revendications

1. Pompe à moteur à double source, comprenant : un corps de moteur (1), une pompe à huile de direction (2) et un boîtier (3) prévu à l'extérieur de la pompe à huile de direction (2), ladite pompe à huile de direction (2) et ledit boîtier (3) étant fixés sur le corps de moteur (1) ;
une chambre de réception (4) est prévue entre le boîtier (3) et la pompe à huile de direction (2), la chambre de réception (4) est en communication interne avec la pompe à huile de direction (2), et l'huile dans la pompe à huile de direction (2) est capable d'entrer dans la chambre de réception (4) ;
**caractérisée en ce que** : le boîtier (3) comprend une surface de paroi interne (31) et une surface de paroi externe (32), et au moins une couche d'espace d'isolation acoustique (33) est prévue entre la surface de paroi interne (31) et la surface de paroi externe (32) ;
ladite surface de paroi interne (31) comprenant un panneau annulaire (311), un premier panneau (312) et un second panneau (313) ; une paroi extérieure du panneau annulaire (311) et une paroi extérieure du premier panneau (312), conjointement avec la surface de paroi externe (32), forment la couche d'espace d'isolation acoustique (33), ladite couche d'espace d'isolation acoustique (33) comprenant un premier espace (331) et un second espace (332) ;
une distance entre une paroi extérieure du second panneau (313) et la surface de paroi externe (32) étant le second espace (332) ; une distance entre la paroi extérieure du premier panneau (312) et la surface de paroi externe (32), ainsi qu'une distance entre la paroi extérieure du panneau annulaire (311) et la surface de paroi externe (32), étant le premier espace (331) ; et une largeur du second espace (332) est inférieure à une largeur du premier espace (331).

2. Pompe à moteur à double source de la revendication 1, ladite couche d'espace d'isolation acoustique (33) étant remplie d'air ; ou
ladite couche d'espace d'isolation acoustique (33) étant dans un état de vide ; ou
ladite couche d'espace d'isolation acoustique (33) étant remplie d'un matériau d'isolation acoustique ; ou
ladite couche d'espace d'isolation acoustique (33) étant remplie d'azote ou de gaz inerte.

3. Pompe à moteur à double source de la revendication 1, ledit boîtier (3) comprenant une entrée d'huile (34) de boîtier et une sortie d'huile (35) de boîtier, ladite pompe à huile de direction (2) comprenant une entrée de pompe à huile et une sortie de pompe à huile, ladite entrée d'huile (34) de boîtier étant en communication avec l'entrée de pompe à huile, et ladite sortie d'huile (35) de boîtier étant en communication avec la sortie de pompe à huile ; et
ledit boîtier (3) comprenant en outre un orifice de retour d'huile (36), et ledit orifice de retour d'huile (36) étant en communication avec un réservoir d'huile externe.

4. Pompe à moteur à double source de la revendication 1, ledit boîtier (3) étant pourvu d'un trou (37) de montage de boîtier, et le trou (37) de montage de boîtier étant raccordé au corps de moteur (1) par l'intermédiaire d'une pièce de raccord.

5. Pompe à moteur à double source de la revendication 1, ledit matériau du boîtier (3) comprenant un matériau non métallique.

6. Pompe à moteur à double source de la revendication 1, ladite pompe à moteur à double source comprenant en outre un dispositif de commande à basse tension (5), ledit corps de moteur (1) comprenant un enroulement de direction à basse tension (11), ledit dispositif de commande à basse tension (5) étant raccordé respectivement à une borne d'alimentation (6) et à l'enroulement de direction à basse tension (11), ledit dispositif de commande à basse tension (5) comprenant un module de coupure (51), et ledit module de coupure (51) étant conçu pour couper l'énergie électrique générée par le couplage de l'enroulement de direction à basse tension (11) durant un fonctionnement d'un enroulement de direction à haute tension (12).

7. Pompe à moteur à double source de la revendication 6, ledit dispositif de commande à basse tension (5) comprenant en outre un module de commande de coupure (52), ledit module de commande de coupure (52) communiquant avec le module de coupure (51), et ledit module de coupure (51) comprenant un circuit de coupure (53) ; ledit dispositif de commande à basse tension (5) étant conçu pour envoyer un signal de commande (P), et ledit module de commande de coupure (52) étant conçu pour recevoir le signal de commande (P) et indiquer que le circuit de coupure (53) doit être éteint ou allumé.

8. Pompe à moteur à double source de la revendication 7, ledit circuit de coupure (53) comprenant une unité de coupure (531), et ladite unité de coupure (531) comprenant un transistor NMOS ou un relais.

9. Pompe à moteur à double source de la revendication 8, ledit circuit de coupure (53) comprenant en outre une diode Zener (532), une première résistance (533) et une seconde résistance (534) ; et
ledit transistor NMOS comprenant une source (N1), une grille (N2) et un drain (N3) ;
ladite source (N1) du transistor NMOS étant raccordée électriquement à une anode de la borne d'alimentation (6), une anode de la diode Zener (532) et une première extrémité de la première résistance (533), respectivement ;
ladite grille (N2) du transistor NMOS étant raccordée électriquement à une cathode de la diode Zener (532), à une seconde extrémité de la première résistance (533) et à une première extrémité de la seconde résistance (534), respectivement ;
ledit drain (N3) du transistor NMOS étant raccordé électriquement à l'enroulement de direction à basse tension (11) ; et
une seconde extrémité de la seconde résistance (534) communiquant avec le module de commande de coupure (52).
